(19) Europäisches Patentamt
European Patent Office
Office européen des brevets

(11) **EP 4 184 212 A1**

(12) **EUROPEAN PATENT APPLICATION**
published in accordance with Art. 153(4) EPC

(43) Date of publication:
**24.05.2023 Bulletin 2023/21**

(51) International Patent Classification (IPC):
**G01S 17/00** *(2020.01)* **G01S 7/487** *(2006.01)*
**G11B 20/22** *(2006.01)*

(21) Application number: **20945989.0**

(22) Date of filing: **20.07.2020**

(86) International application number:
**PCT/CN2020/103124**

(87) International publication number:
**WO 2022/016341 (27.01.2022 Gazette 2022/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **HUANG, Long**
  **Shenzhen, Guangdong 518129 (CN)**
• **SHI, Xianling**
  **Shenzhen, Guangdong 518129 (CN)**
• **QIN, Boya**
  **Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(54) **SIGNAL PROCESSING METHOD AND APPARATUS**

(57) Embodiments of this application provide a signal processing method and apparatus, relate to the field of laser detection technologies, and may be applied to self-driving or assisted driving. In embodiments of this application, accuracy of peak-point signal strength and peak-point receiving time of a received pulse signal can be improved. The method includes: A laser radar determines a first probability distribution of M rising-edge sampling points distributed on each waveform in a preset waveform set; determines a fifth probability distribution indicating that each waveform in the preset waveform set is a received pulse signal; determines, based on the first probability distribution and the fifth probability distribution, a sixth probability distribution indicating that the received pulse signal is each waveform in the preset waveform set; determines a first preset waveform from the preset waveform set based on the sixth probability distribution; and determines the peak-point receiving time and the peak-point signal strength of the received pulse signal based on the first preset waveform.

FIG. 5

**Description**

**TECHNICAL FIELD**

Embodiments of this application relate to the field of laser detection technologies, and in particular, to a signal processing method and apparatus.

**BACKGROUND**

At present, a laser radar may transmit a laser pulse signal to a target object, and record information such as peak-point receiving time and peak-point signal strength of a received pulse signal that is generated by the target object through reflection and that is received by the laser radar, to detect the target object based on these pieces of information. For example, a time of flight (time of flight, ToF) of laser light, that is, $\tau = T2 - T1$, may be calculated based on transmission time T 1 at which the laser radar transmits the laser pulse signal and the peak-point receiving time T2 of the received pulse signal. Further, a distance from the target object to the laser radar may be calculated based on the time of flight $\tau$ and a speed of light. For another example, surface reflectivity of the target object may be further determined based on a relationship between signal strength of the laser pulse signal transmitted by the laser radar and the peak-point signal strength of the received pulse signal, to determine information such as a material of the target object.

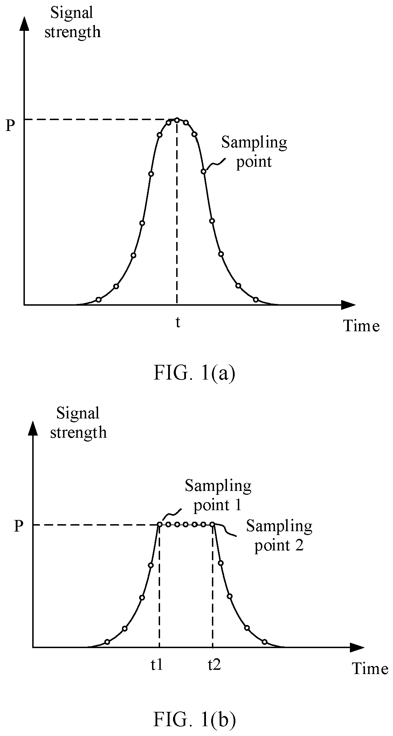

To determine the peak-point receiving time and the peak-point signal strength of the received pulse signal, sampling usually needs to be performed on the received pulse signal to obtain receiving time and signal strength corresponding to each sampling point. Then, a waveform of the received pulse signal is determined based on a plurality of sampling points, and the peak-point receiving time and the peak-point signal strength of the received pulse signal are determined. For example, FIG. 1(a) is a schematic diagram of a fitted waveform of a received pulse signal. Sampling is performed on the received pulse signal to obtain receiving time and signal strength corresponding to each sampling point. Each circle in FIG. 1(a) to FIG. 1(d) represents one sampling. Then, the waveform of the received pulse signal may be obtained through fitting based on the receiving time and the signal strength corresponding to each sampling point, as shown in FIG. 1(a). Peak-point receiving time and peak-point signal strength of the received pulse signal may be determined based on the fitted received pulse signal, where the peak-point receiving time is t, and the peak-point signal strength is P.

However, in actual application, in a process of performing sampling on the received pulse signal by the laser radar, accuracy of a detection result may be affected because signal strength of the received pulse signal exceeds a dynamic range (dynamic range) of the laser radar, or a nonlinear memory effect of an electronic element in the laser radar or the like causes distortion of sampling parameters of collected sampling points.

For example, when the signal strength of the received pulse signal exceeds the dynamic range of the laser radar, a clipping phenomenon occurs in the waveform of the received pulse signal that is obtained through fitting based on the collected sampling points, as shown in FIG. 1(b). With reference to FIG. 1(b), assuming that signal strength of the received pulse signal in a region between a moment t1 and a moment t2 exceeds the dynamic range of the laser radar, signal strength corresponding to a sampling point in this region is maximum signal strength of the dynamic range of the laser radar, rather than actual signal strength of the received pulse signal. As a result, the clipping phenomenon occurs in the waveform of the received pulse signal that is obtained through fitting based on these sampling points. Therefore, avoiding an inaccurate detection result caused by distortion of sampling parameters is one of key factors in ensuring normal operation of the laser radar.

**SUMMARY**

Embodiments of this application provide a signal processing method and apparatus, to resolve a problem that because sampling parameters of a sampling point of a received pulse signal are distorted, peak-point receiving time and peak-point signal strength of the received pulse signal cannot be accurately obtained, and further an inaccurate detection result is caused.

According to a first aspect, a signal processing method is provided, including: performing N times of sampling on a received pulse signal to obtain N sampling points, where sampling parameters of each of the N sampling points include receiving time and signal strength that are corresponding to the sampling point, the N sampling points include M rising-edge sampling points and P clipping sampling points, and N, M, and P are all integers greater than or equal to 1; determining a first probability distribution of the M rising-edge sampling points distributed on each waveform in a preset waveform set, where the preset waveform set includes at least one preset waveform; determining a second probability distribution of peak-point receiving time of the received pulse signal and a third probability distribution of peak-point signal strength of the received pulse signal based on the P clipping sampling points; determining a fourth probability distribution of a pulse width of the received pulse signal; determining, based on the second probability distribution, the third probability distribution, and the fourth probability distribution, a fifth probability distribution indicating that each waveform in the preset waveform set is the received pulse signal; determining, based on the first probability distribution and the fifth probability distribution, a sixth probability distribution indicating that the received pulse signal is each waveform in the preset waveform set; determining a first preset waveform from the preset waveform set based on the sixth probability distribution; and determining the peak-point receiving time and the peak-point signal strength of the received pulse signal based on the first preset waveform.

According to the technical solution provided in this embodiment, in a process of determining the waveform of the received pulse signal, a likelihood function (namely, the first probability distribution) of the waveform of the received pulse signal is first determined based on the rising-edge sampling point obtained through sampling. Then, a prior distribution (namely, the fifth probability distribution) of the waveform of the received pulse signal is determined based on prior information of the received pulse signal. The prior information includes probability distributions of various parameters that affect the waveform of the received pulse signal, and specifically includes: a probability distribution of the peak-point receiving time of the received pulse signal (namely, the second probability distribution), a probability distribution of the peak-point signal strength of the received pulse signal (namely, the third probability distribution), and a probability distribution of the pulse width of the received pulse signal (namely, the fourth probability distribution). Further, a posterior distribution (namely, the sixth probability distribution) of the waveform of the received pulse signal may be calculated. Afterwards, a waveform (namely, the first preset waveform) that may be the received pulse signal may be determined from the preset waveform set based on the sixth probability distribution. Next, the peak-point receiving time and the peak-point signal strength of the received pulse signal may be determined based on the first preset waveform. The peak-point signal strength and the peak-point receiving time can be determined more accurately by using the foregoing method.

In a possible design, the determining a second probability distribution of peak-point receiving time of the received pulse signal and a third probability distribution of peak-point signal strength of the received pulse signal based on the P clipping sampling points includes: determining a minimum value of a value range of the peak-point receiving time based on a smallest value of receiving time corresponding to the P clipping sampling points; determining a maximum value of the value range of the peak-point receiving time based on a largest value of the receiving time corresponding to the P clipping sampling points; determining the second probability distribution based on the value range of the peak-point receiving time; determining a minimum value of a value range of the peak-point signal strength based on signal strength corresponding to the P clipping sampling points; and determining the third probability distribution based on the value range of the peak-point signal strength. In this design, the value range of the peak-point receiving time and the value range of the peak-point signal strength can be determined based on the clipping sampling point, and further the second probability distribution and the third probability distribution can be determined more accurately based on the determined value ranges.

In a possible design, the determining the second probability distribution based on the value range of the peak-point receiving time includes: determining a probability distribution of the peak-point receiving time when the peak-point receiving time satisfies an even distribution within the value range of the peak-point receiving time, to obtain the second probability distribution. In this design, a calculation process can be simplified, and the second probability distribution can be quickly obtained in this application.

In a possible design, the determining the third probability distribution based on the value range of the peak-point signal strength includes: determining a probability distribution of the peak-point signal strength when the peak-point signal strength satisfies an even distribution within the value range of the peak-point signal strength, to obtain the third probability distribution. In this design, a calculation process can be simplified, and the third probability distribution can be quickly obtained in this application.

In a possible design, the determining the third probability distribution based on the value range of the peak-point signal strength includes: determining a probability distribution of the peak-point signal strength within the value range of the peak-point signal strength when a probability distribution of surface reflectivity of an object reflecting the received pulse signal is an even distribution, to obtain the third probability distribution. In this design, the third probability distribution can be obtained based on the probability distribution of the surface reflectivity of the object reflecting the received pulse signal, so that the third probability distribution is obtained more accurately.

In a possible design, the determining a fourth probability distribution of a pulse width of the received pulse signal includes: determining a probability distribution of the pulse width when the pulse width satisfies an even distribution within a value range of the pulse width, to obtain the fourth probability distribution. In this design, a calculation process can be simplified, and the fourth probability distribution can be quickly obtained in this application.

In a possible design, the determining a first probability distribution of the M rising-edge sampling points distributed on each waveform in a preset waveform set includes: determining a probability distribution of each of the M rising-edge sampling points distributed on each waveform in the preset waveform set; and determining the first probability distribution based on the probability distribution of each of the M rising-edge sampling points distributed on each waveform in the preset waveform set. In this design, the first probability distribution can be determined based on the probability distribution of each of the M rising-edge sampling points distributed on each waveform in the preset waveform set.

In a possible design, the determining a probability distribution of each of the M rising-edge sampling points distributed on each waveform in the preset waveform set includes: based on a probability distribution of noise strength during sampling of a target sampling point, determining a probability distribution of the target sampling point distributed on each waveform in the preset waveform set, where the target sampling point includes any one of the M rising-edge sampling points. In this design, the probability distribution of each of the M sampling points distributed on each waveform in the preset waveform set is determined by using impact of noise on a sampling result, so that a probability distribution result can be determined more accurately.

In a possible design, the probability distribution of the target sampling point distributed on each waveform in the preset waveform set satisfies the following formula 1:

$$p_k = \left(\frac{1}{\pi N_0}\right)^{\frac{1}{2}} \exp\left(-\frac{(y_k - s_k)^2}{N_0}\right) \qquad \text{formula 1}$$

$p_k$ represents a distribution probability of the target sampling point $k$ on a target waveform in the preset waveform set, $y_k$ represents signal strength corresponding to the target sampling point $k$, and $s_k$ represents signal strength of the target waveform during collection of the target sampling point $k$. In this design, the probability distribution of the noise strength during sampling is reflected by using a Gaussian distribution, and then a probability distribution of a sampling point distributed on each waveform in the preset waveform set is calculated by using the formula 1. A probability distribution of each sampling point distributed on each waveform in the preset waveform set can be quickly calculated by using the formula 1.

In a possible design, the determining, based on the first probability distribution and the fifth probability distribution, a sixth probability distribution indicating that the received pulse signal is each waveform in the preset waveform set includes: constructing, based on the first probability distribution and the fifth probability distribution, a Markov chain by using the preset waveform set as state space, to obtain a sample sequence $\{z_1, z_2, ..., z_m, z_{m+1}, ..., z_{m+n-1}, z_{m+n}\}$ of the Markov chain, where each sample in the sample sequence is used to represent one waveform, and the last n samples $\{z_{m+1}, ..., z_{m+n-1}, z_{m+n}\}$ in the sample sequence $\{z_1, z_2, ..., z_m, z_{m+1}, ..., z_{m+n-1}, z_{m+n}\}$ are used to represent the sixth probability distribution; and the determining a first preset waveform from the preset waveform set based on the sixth probability distribution includes: calculating an expectation of the last n samples $\{z_{m+1}, ..., z_{m+n-1}, z_{m+n}\}$ to obtain the first preset waveform. In this design, the sixth probability distribution can be quickly and conveniently determined by constructing the Markov chain, to obtain the first preset waveform.

In a possible design, the constructing, based on the first probability distribution and the fifth probability distribution, a Markov chain by using the preset waveform set as state space includes: constructing, by using a Metropolis-Hastings algorithm, the Markov chain whose acceptance distribution $\alpha(z, z')$ satisfies the following formula 2:

$$\alpha(z, z') = \min\left\{1, \frac{p(y \mid z')p(z')q(z', z)}{p(y \mid z)p(z)q(z, z')}\right\} \qquad \text{formula 2}$$

$z$ is one sample in the sample sequence of the Markov chain, $z'$ is a sample following $z$ in the sample sequence of the Markov chain, $p(y \mid z')$ is a probability corresponding to $z'$ in the first probability distribution, $p(y \mid z)$ is a probability corresponding to $z$ in the first probability distribution, $p(z')$ is a probability corresponding to $z'$ in the fifth probability distribution, $p(z)$ is a probability corresponding to $z$ in the fifth probability distribution, and $q(z', z)$ and $q(z, z')$ are proposal distributions of the Markov chain.

According to a second aspect, this application provides a signal processing apparatus. The signal processing apparatus can implement functions in the first aspect or the possible designs of the first aspect. These functions may be implemented by using hardware, or may be implemented by hardware by executing corresponding software. The hardware or the software includes one or more modules corresponding to the foregoing functions. For example, the signal processing apparatus may include: a sampling unit, configured to perform N times of sampling on a received pulse signal to obtain N sampling points, where sampling parameters of each of the N sampling points include receiving time and signal strength that are corresponding to the sampling point, the N sampling points include M rising-edge sampling points and P clipping sampling points, and N, M, and P are all integers greater than or equal to 1; a first probability determining unit, configured to determine a first probability distribution of the M rising-edge sampling points distributed on each waveform in a preset waveform set, where the preset waveform set includes at least one preset waveform; a second probability determining unit, configured to determine a second probability distribution of peak-point receiving time of the received pulse signal and a third probability distribution of peak-point signal strength of the received pulse signal based on the P clipping sampling points, where the second probability determining unit is further configured to determine a fourth probability distribution of a pulse width of the received pulse signal; a third probability determining unit, configured to determine, based on the second probability distribution, the third probability distribution, and the fourth probability distribution, a fifth probability distribution indicating that each waveform in the preset waveform set is the received pulse signal; a fourth probability determining unit, configured to determine, based on the first probability distribution and the fifth probability distribution, a sixth probability distribution indicating that the received pulse signal is each waveform in the preset waveform set; a waveform determining unit, configured to determine a first preset waveform from the preset waveform set based on the sixth probability distribution; and a parameter determining unit, configured to determine the peak-point receiving time and the peak-point signal strength of the received pulse signal based on the first preset waveform. Certainly, the signal processing apparatus may alternatively include more or fewer units, configured to implement other functions. According to a third aspect, a signal processing apparatus is provided. The signal processing apparatus includes one or more processors, the one or more processors are coupled to one or more memories, and the one or more memories store computer instructions. When the one or more processors execute the computer instructions, the signal processing apparatus is enabled to perform the signal processing method provided in the first aspect.

According to a fourth aspect, a chip is provided. The chip includes a processing circuit and an interface, and the processing circuit is configured to invoke a computer program from a storage medium and run the computer program stored in the storage medium, to perform the signal processing method provided in the first aspect.

According to a fifth aspect, a laser radar is provided, including the signal processing apparatus provided in the second aspect or the third aspect, or including the chip provided in the fourth aspect.

According to a sixth aspect, a computer-readable storage medium is provided. The computer-readable storage medium stores instructions, and when the instructions are run, the signal processing method in the first aspect or the possible designs of the first aspect is performed.

According to a seventh aspect, a computer program product including instructions is provided. When the computer program product runs on a computer, the computer is enabled to perform the signal processing method in the first aspect or the possible designs of the first aspect.

For technical effects brought by any design manner in the second aspect to the seventh aspect, reference may be made to the technical effects brought by different design manners in the first aspect. Details are not described herein again.

## BRIEF DESCRIPTION OF DRAWINGS

FIG. 1(a) to FIG. 1(d) are a schematic diagram 1 of a fitted waveform of a received pulse signal according to an embodiment of this application;
FIG. 2 is a schematic diagram of a structure of a laser radar according to an embodiment of this application;
FIG. 3 is a schematic diagram 2 of a fitted waveform of a received pulse signal according to an embodiment of this application;
FIG. 4 is a schematic diagram 3 of a fitted waveform of a received pulse signal according to an embodiment of this application;
FIG. 5 is a schematic flowchart 1 of a signal processing method according to an embodiment of this application;
FIG. 6A and FIG. 6B are a schematic flowchart 2 of a signal processing method according to an embodiment of this application;
FIG. 7 is a schematic diagram of sampling points obtained by performing sampling on a received pulse signal according to an embodiment of this application;
FIG. 8 is a schematic diagram of a waveform of a received pulse signal obtained through fitting by using the conventional technology;
FIG. 9 is a schematic diagram of a waveform of a received pulse signal obtained through fitting by using a signal processing method according to an embodiment of this application;
FIG. 10 is a schematic diagram 1 of a structure of a signal processing apparatus according to an embodiment of this application; and
FIG. 11 is a schematic diagram 2 of a structure of a signal processing apparatus according to an embodiment of this application.

## DESCRIPTION OF EMBODIMENTS

The following describes technical solutions in embodiments of this application with reference to the accompanying drawings in embodiments of this application. For clearly description of the technical solutions in embodiments of this application, terms such as "first" and "second" are used in embodiments of this application to distinguish between same items or similar items that have basically same functions or purposes. A person skilled in the art may understand that the terms such as "first" and "second" do not limit a quantity or an execution sequence, and the terms such as "first" and "second" do not indicate a definite difference. In addition, in embodiments of this application, a term such as "example" or "for example" is used to represent giving an example, an illustration, or a description. Any embodiment or design scheme described as "example" or "for example" in embodiments of this application should not be construed as being preferred or having more advantages over another embodiment or design scheme. Exactly, use of the term such as "example" or "for example" is intended to present a related concept in a specific manner, and facilitates understanding.

Related technologies used in embodiments of this application are first described.

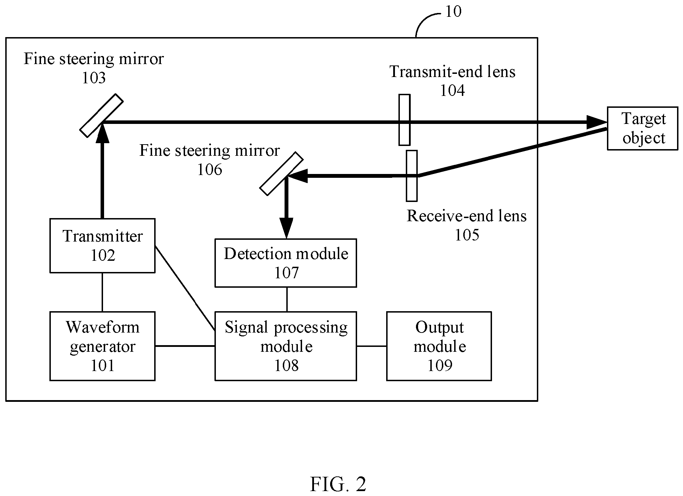

A laser radar is a radar system that transmits a laser beam to detect characteristic quantities such as a location and a speed of a target object. An operating principle of the laser radar is to transmit a laser pulse signal to the target object, and record peak-point receiving time and peak-point signal strength of a signal (referred to as a received pulse signal below) that is reflected from the target object and that is received by the laser radar. Then, related information of the target object may be obtained based on the peak-point receiving time and the peak-point signal strength of the received pulse signal and information about the transmitted laser pulse signal. For example, the related information includes a distance from the target object to the laser radar, surface reflectivity of the target object, and another parameter. FIG. 2 is a schematic diagram of a structure of a laser radar. In the laser radar 10, a waveform generator (waveform generator) 101 is configured to control a transmitter (transmitter) 102 to transmit a laser pulse signal with a preset waveform. In addition, the waveform generator 101 and the transmitter 102 further send signal parameters (for example, transmission time and signal strength) of the transmitted laser pulse signal to a signal processing module 108. A fine steering (fine steering) mirror 103 is configured to control a direction of the laser pulse signal, so that the laser pulse signal is transmitted to a to-be-detected target object through a transmit-end lens 104. Then, the laser radar 10 receives, through a receive-end lens 105, a received pulse signal reflected from the target object, and adjusts a direction of the received pulse signal by using a fine steering mirror 106, so that a detection module 107 receives the received pulse signal. Afterwards, the detection module 107 performs detection and sampling on the received pulse signal to obtain a plurality of sampling points, where sampling parameters of each sampling point may include receiving time, signal strength, and the like that are corresponding to the sampling point; and the detection module 107 sends the sampling parameters of each sampling point to the signal processing module 108. The signal processing module 108 determines related information of the target object based on the sampling points from the detection module 107 and the signal parameters from the waveform generator 101 and the transmitter 102. For example, the signal processing module 108 obtains a waveform of the received pulse signal through fitting based on the sampling points, to determine peak-point receiving time and peak-point signal strength of the received pulse signal; and then calculates the related information such as a distance from the target object to the laser radar based on the peak-point receiving time and the peak-point signal strength of the received pulse signal and the signal parameters from the waveform generator 101 and the transmitter 102.

It should be noted that in this embodiment, receiving time corresponding to a sampling point may be receiving time that is of the received pulse signal and that is obtained through sampling at the sampling point, and signal strength corresponding to a sampling point may be signal strength that is of the received pulse signal and that is obtained through sampling at the sampling point.

The laser radar 10 shown in FIG. 2 is only to facilitate understanding of the technical solution of this application by readers, and an example principle structure of the laser radar is provided. It is easily understood that the function modules in the laser radar 10 may be implemented by using hardware, software, or a combination of hardware and software. For example, the transmitter 102 may be a laser diode (laser diode), and the detection module 107 may include an avalanche photodiode (Avalanche Photon Diode, APD), an analog to digital converter (analog to digital converter, ADC), and a detector (detector).

At present, in a process of performing sampling on the received pulse signal by the laser radar, if the strength of the laser pulse signal transmitted by the laser radar is high, surface reflectivity of the target object is high, or the distance between the target object and the laser radar is short, the strength of the received pulse signal may be high. When the signal strength of the received pulse signal exceeds a dynamic range of the laser radar, for example, when the strength of the received pulse signal exceeds a normal operating range of the detection unit 107 in the laser radar 10 shown in FIG. 2, the detection unit 107 cannot obtain, through sampling, signal strength greater than the normal operating range. As a result, a clipping phenomenon occurs in the waveform of the received pulse signal that is obtained through fitting based on the sampling points.

It should be noted that the dynamic range of the laser radar described in this embodiment of this application can be understood as a linear operating range of a function unit (for example, the detection unit 107 in FIG. 2) that is in the laser radar and that is configured to detect the received pulse signal. When the signal strength of the received pulse signal does not exceed the linear operating range, signal strength corresponding to a sampling point can reflect the current signal strength of the received pulse signal. To be specific, as the signal strength of the received pulse signal increases, the signal strength corresponding to the collected sampling point also increases accordingly. When the signal strength of the received pulse signal exceeds maximum signal strength within the linear operating range, signal strength collected by the laser radar at a sampling point is saturated. To be specific, the signal strength corresponding to the sampling point collected in this case no longer increases with the strength of the received pulse signal, but remains at the maximum signal strength within the linear operating range.

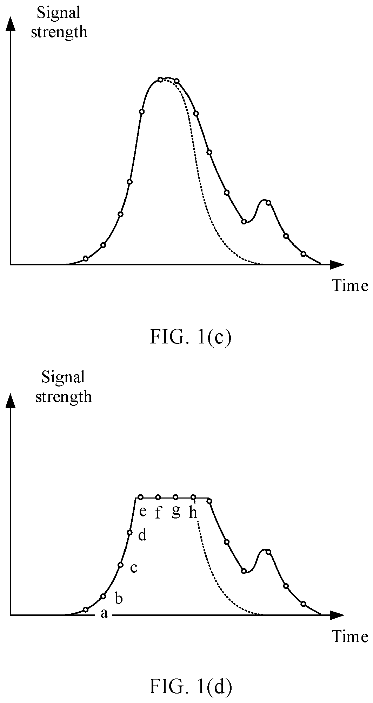

In addition, due to a nonlinear memory effect of an electronic element in the laser radar, as shown in FIG. 1(c), it can be learned that, for sampling points at a falling-edge part of the received pulse signal, collected signal strength is greater than the actual signal strength of the received pulse signal, and then a tailing phenomenon occurs on a fitted waveform of the received pulse signal. Moreover, for the sampling points at the falling-edge part, the collected signal strength fluctuates greatly, and then a ringing phenomenon occurs on the fitted waveform of the received pulse signal. Further, when the laser radar collects sampling parameters at each sampling point, if the clipping phenomenon, the tailing phenomenon, and the ringing phenomenon exist simultaneously, signal strength of the collected sampling points is shown in FIG. 1(d). It can be learned that in this case, signal strength of only some sampling points on a rising edge can reflect the strength of the received pulse signal, and signal strength of other sampling points are distorted.

Moreover, if a laser pulse signal is continuously transmitted twice, when a time interval for transmitting the laser pulse signal twice is short, sampling performed on a falling edge of the received pulse signal may be interfered with by a next received pulse signal.

It can be learned that, when the laser radar collects the sampling parameters at each sampling point, if the clipping phenomenon, the tailing phenomenon, the ringing phenomenon, interference by another received pulse signal, and the like occur, the signal strength of the sampling points may be distorted during sampling performed on a latter part of the received pulse signal. If the signal strength collected at the sampling points is distorted, the waveform of the received pulse signal cannot be accurately obtained through fitting, and the peak-point signal strength and the peak-point receiving time of the received pulse signal cannot be determined. Finally, accuracy of a detection result of the laser radar is affected. Therefore, avoiding an inaccurate detection result caused by distortion of sampling parameters is one of key factors in ensuring normal operation of the laser radar.

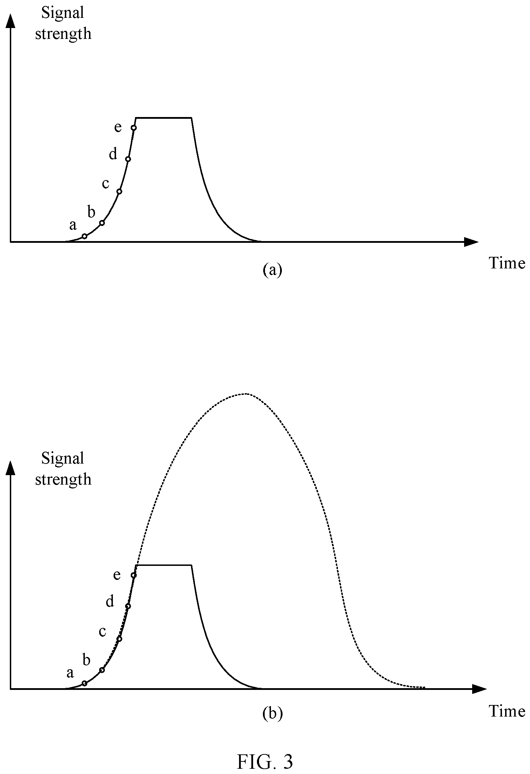

To resolve the foregoing technical issue, sampling parameters may be collected at n rising-edge sampling points before a clipping phenomenon occurs. For example, sampling parameters are collected at five sampling points a, b, c, d, and e, as shown in (a) in FIG. 3. Then, waveform fitting is performed based on the n sampling points, to obtain a waveform of a received pulse signal through fitting. For example, the waveform of the received pulse signal may be obtained through fitting by using a least square method. Afterwards, peak-point signal strength and peak-point receiving time of the received pulse signal are determined based on the fitted received pulse signal, to obtain a detection result. However, in the method, because effective fitting points can be provided only on a rising edge, the fitted waveform has a large error. For example, the waveform of the received pulse signal obtained through fitting based on the five sampling points a, b, c, d, and e by using the least square method may be denoted by a dotted-line waveform in (b) in FIG. 3. It can be learned that there is a large error between the fitted waveform and an actual waveform of the received pulse signal. Consequently, an accurate detection result cannot be obtained by using the method.

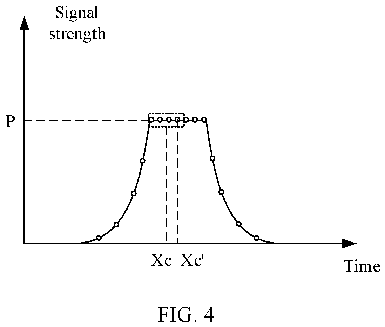

Alternatively, sampling may be first performed on a received pulse signal, and then a sliding window is set to obtain signal strength collected at sampling points in the sliding window. When the signal strength in the sliding window is continuously greater than a preset threshold, it is determined that the received pulse signal exists in the sliding window. Then, a waveform centroid is found in the determined received pulse signal, and receiving time of the waveform centroid is used as peak-point receiving time of the received pulse signal. As shown in FIG. 4, the signal strength collected in the sliding window (denoted by a dotted-line box in the figure) continuously remains at maximum signal strength P, it is determined that the received pulse signal exists in the sliding window, and then a middle point of the sliding window is used as a peak point of the received pulse signal. It can be learned that, the method imposes a requirement on a width of the sliding window. In FIG. 4, when the width of the sliding window is small, the peak-point receiving time that is of the received pulse signal and that is determined based on the middle point of the sliding window is Xc, but actual peak-point receiving time is Xc', and consequently there is an error. In addition, in this manner, there is a problem that only the peak-point receiving time can be estimated, and peak-point signal strength cannot be determined.

To resolve the foregoing problem, an embodiment of this application provides a signal processing method. In a process of determining a waveform of a received pulse signal, prior information of the received pulse signal is used. The prior information includes a probability distribution of peak-point receiving time of the received pulse signal, a probability distribution of peak-point signal strength of the received pulse signal, and a probability distribution of a pulse width of the received pulse signal. Then, the waveform of the received pulse signal is more accurately determined through limitation imposed by these pieces of prior information on the waveform of the received pulse signal, to determine the peak-point signal strength and the peak-point receiving time more accurately.

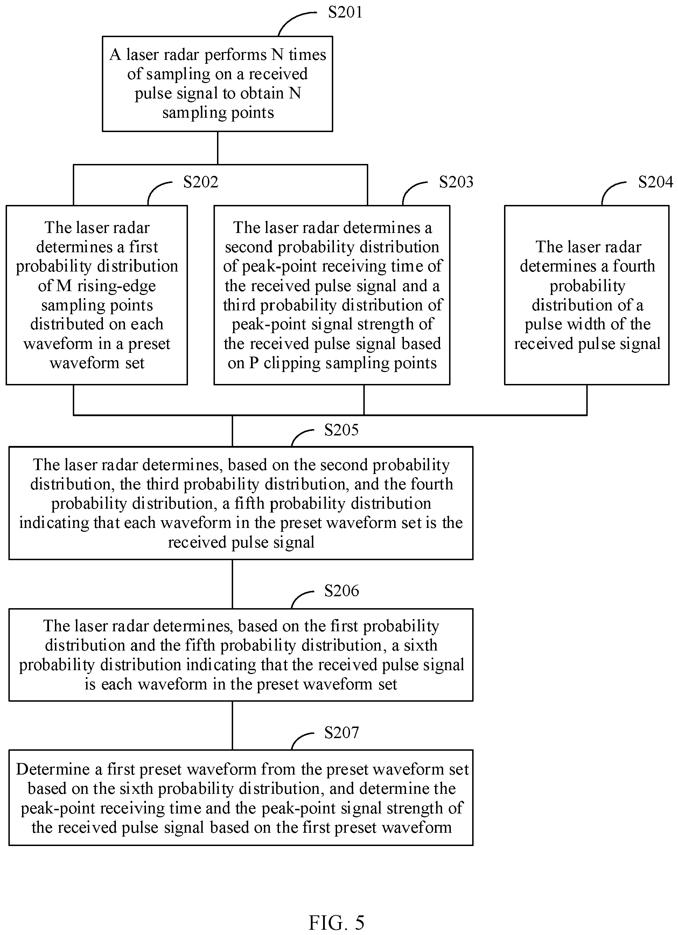

The signal processing method provided in this embodiment of this application can be applied to a laser radar or another device in which peak-point receiving time and peak-point signal strength of a received pulse signal need to be determined, so that the device determines the received pulse signal more accurately. The following uses a laser radar as an example for describing the method. As shown in FIG. 5, the method includes S201 to S207 as follows.

S201: The laser radar performs N times of sampling on a received pulse signal to obtain N sampling points.

For example, in the laser radar 10 shown in FIG. 2, after a laser pulse signal is transmitted to a target object, the laser pulse signal encounters the target object to generate a received pulse signal through reflection. Then, the received pulse signal passes through the receive-end lens 105, the fine steering mirror 106, and the detection module 107. After receiving the received pulse signal, the detection module 107 may perform sampling on the received pulse signal to obtain a sampling point.

Sampling parameters of each of the N sampling points include receiving time and signal strength that are corresponding to the sampling point. For example, the N sampling points include three sampling points a, b, and c. Sampling parameters of the sampling point a include receiving time and signal strength corresponding to the sampling point a, sampling parameters of the sampling point b include receiving time and signal strength corresponding to the sampling point b, and sampling parameters of the sampling point c include receiving time and signal strength corresponding to the sampling point c.

In addition, the N sampling points include M rising-edge sampling points and P clipping sampling points, and N, M, and P are all positive integers greater than or equal to 1.

In an actual implementation process, signal strength corresponding to a sampling point may be a parameter that reflects optical signal strength, for example, optical power of the received pulse signal at the sampling point, or may be a voltage value or a current value generated at the sampling point in response to the optical signal strength of the received pulse signal. An actual physical quantity used for signal strength may not be limited in this application.

It should be noted that in this embodiment of this application, the rising-edge sampling point is a sampling point on a rising edge of the received pulse signal. For example, four rising-edge sampling points a, b, c, and d are included in FIG. 1(d). The clipping sampling point is a sampling point at a part in which a clipping phenomenon occurs. For example, four clipping sampling points e, f, g, and h are included in FIG. 1(d).

S202: The laser radar determines a first probability distribution of the M rising-edge sampling points distributed on each waveform in a preset waveform set.

The preset waveform set includes at least one preset waveform.

It can be learned from the foregoing descriptions of the laser radar that, there is a low probability of distortion when the laser radar performs sampling on the rising edge of the received pulse signal. Therefore, sampling parameters of the rising-edge sampling point may be used to determine a probability distribution that each waveform in the preset waveform set is a waveform of the received pulse signal, that is, determine the first probability distribution of the M rising-edge sampling points distributed on each waveform in the preset waveform set.

For example, the received pulse signal is usually a Gaussian pulse. To be specific, current signal strength s of the received pulse signal and current time *x* satisfy the following formula (1):

$$ \mathrm{s} = A \exp\left( -\frac{(x-t)^2}{2\sigma^2} \right) \tag{1} $$

When waveform parameters *A*, *t*, and $\sigma$ each have different values, corresponding waveforms are different. In the following, for ease of description, a set of *A*, *t*, and $\sigma$ is denoted by $\theta$, that is, $\theta=(A,t,\sigma)$.

It may be considered that a waveform satisfying the formula (1) may be the waveform of the received pulse signal. Therefore, the preset waveform set can be constructed by using the waveform satisfying the formula (1). In other words, the preset waveform set includes at least one preset waveform satisfying the formula (1).

Certainly, it can be understood that, in an implementation process of the technical solution provided in this embodiment of this application, the waveform in the preset waveform set may be alternatively determined in another manner. In other words, a person skilled in the art can select a proper preset waveform set depending on an actual requirement. A specific waveform included in the preset waveform set may not be limited in this application.

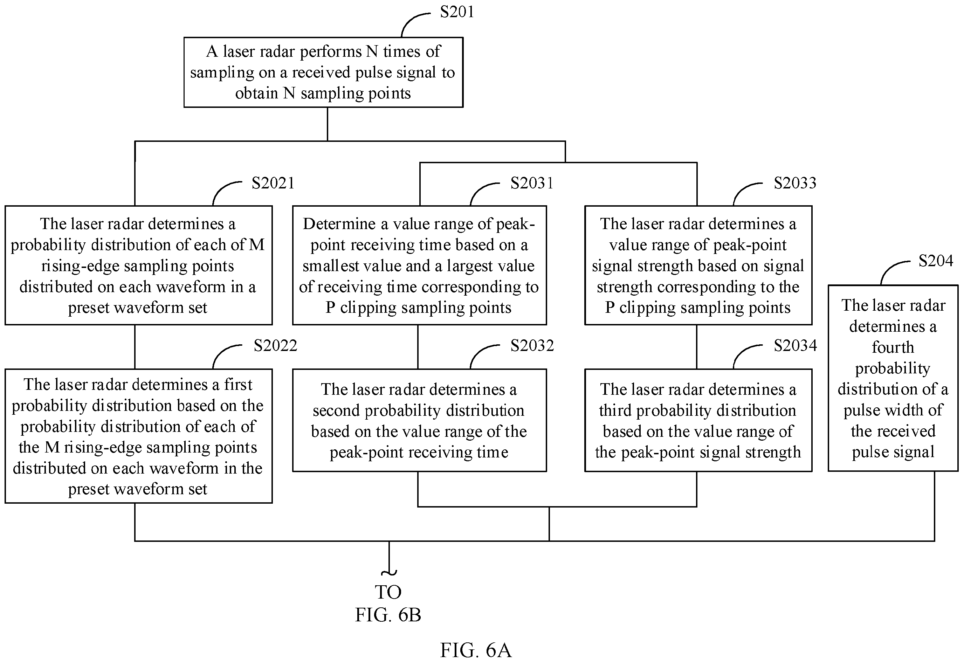

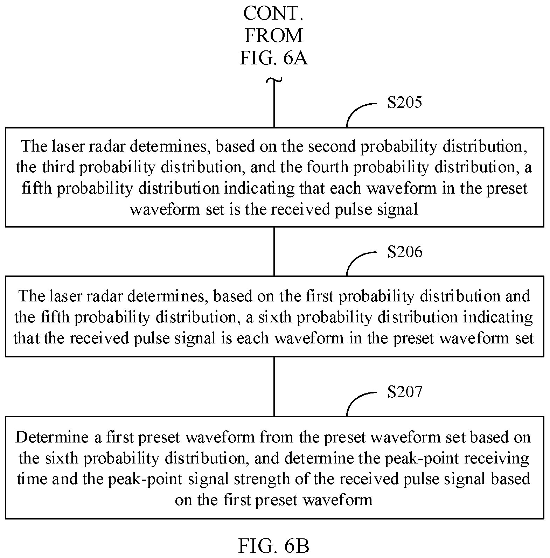

In an implementation, a probability that M events occur simultaneously may be determined based on probabilities that the M events occur separately. For example, the probability that the M events occur simultaneously may be obtained by multiplying the probabilities that the M events occur separately. Therefore, the first probability distribution of the M rising-edge sampling points distributed on each waveform in the preset waveform set may also be determined based on a probability distribution of each of the M rising-edge sampling points distributed on each waveform in the preset waveform set. As shown in FIG. 6A and FIG. 6B, S202 in this application may specifically include S2021 and S2022 as follows.

S2021: The laser radar determines the probability distribution of each of the M rising-edge sampling points distributed on each waveform in the preset waveform set.

For example, the M rising-edge sampling points include a total of five sampling points: a sampling point 1, a sampling point 2, a sampling point 3, a sampling point 4, and a sampling point 5. Sampling parameters of each of the five sampling points include receiving time and signal strength corresponding to the sampling point. In addition, it is assumed that the preset waveform set includes the waveform satisfying the formula (1). Then, for each sampling point, a distribution probability of the sampling point on each waveform in the preset waveform set may be calculated based on the receiving time and the signal strength of the sampling point.

In a possible design, the sampling parameters of the sampling points at a rising-edge part of the received pulse signal are mainly interfered with by noise. In other words, signal strength collected at the sampling points actually reflects a sum of the current signal strength of the received pulse signal and current noise strength. Therefore, during calculation of a distribution probability of a target sampling point on each waveform in the preset waveform set, S2021 may include: based on a probability distribution of noise strength during sampling of the target sampling point, determining a probability distribution of the target sampling point distributed on each waveform in the preset waveform set, where the target sampling point may be any one of the M rising-edge sampling points.

For example, it is assumed that signal strength collected at the target sampling point is y, the noise strength during sampling of the target sampling point is w, and signal strength of the waveform (for example, referred to as a target waveform) in the preset waveform set at the target sampling point is s. In this case, if the received pulse signal is the target waveform, w=y-s needs to hold true. In addition, because y is known, based on the probability distribution of the noise strength w during sampling of the target sampling point, a probability of w=y-s, that is, a distribution probability of the target sampling point on the target waveform, can be calculated. For example, it is assumed that the signal strength collected at the target sampling point is 5 (a physical quantity unit of the signal strength may be determined depending on an actual situation, and may be optical power, a voltage, a current, or the like), the signal strength of the target waveform at the target sampling point is 4, and the probability that the noise strength is 1 during sampling of the target sampling point is 20%. In this case, it can be determined that the distribution probability of the target sampling point on the target waveform is 20%.

Further, in a possible design, the probability distribution of the noise strength generally conforms to a Gaussian distribution in which a mean value is 0 and a variance is $N_0$, where $N_0$ is noise power, that is, the probability distribution $p_{(w)}$ of the noise strength satisfies the following formula (3):

$$p_{(w)} = \left(\frac{1}{\pi N_0}\right)^{\frac{1}{2}} \exp\left(-\frac{(w)^2}{N_0}\right) \qquad (3)$$

Therefore, in the technical solution provided in this embodiment of this application, when the probability distribution of each of the M rising-edge sampling points distributed on each waveform in the preset waveform set is determined, the probability distribution of the target sampling point distributed on each waveform in the preset waveform set may be determined by using the following formula (4). In other words, the probability distribution of the target sampling point distributed on each waveform in the preset waveform set satisfies the following formula (4):

$$p_k = \left(\frac{1}{\pi N_0}\right)^{\frac{1}{2}} \exp\left(-\frac{(y_k - s_k)^2}{N_0}\right) \qquad (4)$$

$p_k$ represents the distribution probability of the target sampling point $k$ on the target waveform in the preset waveform set, $y_k$ represents the signal strength corresponding to the target sampling point $k$, and $s_k$ represents the signal strength of the target waveform during collection of the target sampling point $k$. A value of $N_0$ may be set depending on an actual requirement.

S2022: The laser radar determines the first probability distribution based on the probability distribution of each of the M rising-edge sampling points distributed on each waveform in the preset waveform set.

For example, after the probability distribution of each of the M rising-edge sampling points distributed on each waveform in the preset waveform set is determined, a multiplication operation may be performed on probability distributions of the M rising-edge sampling points distributed on each waveform in the preset waveform set, to determine the first probability distribution.

For example, when the probability distribution of the target sampling point distributed on each waveform in the preset waveform set satisfies the formula (4), and the preset waveform set includes the at least one preset waveform satisfying the formula (1), it can be determined that the first probability distribution satisfies the following formula (5):

$$p_{(y|\theta)} = \left(\frac{1}{\pi N_0}\right)^{\frac{M}{2}} \exp\left(-\sum_{k=1}^{M} \frac{(y_k - s_k(\theta))^2}{N_0}\right) \tag{5}$$

$p_{(y|\theta)}$ represents a distribution probability of the M rising-edge sampling points on a target waveform whose waveform parameters $A$, $t$, and $\sigma$ are $\theta$, $y_k$ represents the signal strength corresponding to the target sampling point $k$, and $s_k(\theta)$ represents signal strength of the target waveform whose waveform parameters $A$, $t$, and $\sigma$ are $\theta$ during collection of the target sampling point $k$ .

S203: The laser radar determines a second probability distribution of peak-point receiving time of the received pulse signal and a third probability distribution of peak-point signal strength of the received pulse signal based on the P clipping sampling points.

If the clipping phenomenon exists, it indicates that the peak-point receiving time of the received pulse signal is within a time range corresponding to a clipping part, and that the peak-point signal strength of the received pulse signal is greater than signal strength obtained through sampling at the clipping part. For example, in FIG. 1(b), it can be determined that the peak-point receiving time of the received pulse signal is between t1 and t2, and that the peak-point signal strength of the received pulse signal is greater than signal strength P. In this case, value ranges of the peak-point receiving time and the peak-point signal strength of the received pulse signal may be determined by using sampling parameters collected at the P clipping sampling points, to determine probability distributions of the peak-point receiving time and the peak-point signal strength (namely, the second probability distribution and the third probability distribution).

In an implementation, as shown in FIG. 6A and FIG. 6B, the determining a second probability distribution based on the P clipping sampling points may include the following steps.

S2031: The laser radar determines the value range of the peak-point receiving time based on a smallest value and a largest value of receiving time corresponding to the P clipping sampling points.

A minimum value of the value range of the peak-point receiving time may be determined based on the smallest value of the receiving time corresponding to the P clipping sampling points. In addition, a maximum value of the value range of the peak-point receiving time may be determined based on the largest value of the receiving time corresponding to the P clipping sampling points.

For example, in FIG. 1(b), it can be learned that receiving time corresponding to a sampling point 1 and a sampling point 2 is respectively the smallest value and the largest value of the receiving time corresponding to the clipping sampling points. In this case, the maximum value and the minimum value of the value range of the peak-point receiving time may be determined based on the receiving time corresponding to the sampling point 1 and the sampling point 2.

S2032: The laser radar determines the second probability distribution based on the value range of the peak-point receiving time.

Specifically, after the value range of the peak-point receiving time is determined, the probability distribution of the peak-point receiving time (namely, the second probability distribution) within the value range may be determined based on prior information such as characteristics of the laser radar.

In a possible design, for ease of calculation, it may be considered that the probability distribution of the peak-point receiving time within the value range is an even distribution. Then, the probability distribution of the peak-point receiving time when the peak-point receiving time satisfies the even distribution within the value range of the peak-point receiving time is determined, to obtain the second probability distribution.

For example, if the waveform of the received pulse signal satisfies the formula (1), the second probability distribution may be reflected as a probability distribution $p_{(t)}$ of the waveform parameter $t$, and is expressed as follows:

$$p_{(t)} = \begin{cases} \dfrac{1}{t_2 - t_1} & t_1 \leq t \leq t_2 \\ 0 & t < t_1 \text{ or } t > t_2 \end{cases}$$

$t_1$ represents the minimum value of the value range of the peak-point receiving time, and $t_2$ represents the maximum value of the value range of the peak-point receiving time.

It should be noted that the second probability distribution of the peak-point receiving time may be alternatively determined in another manner. For example, the laser radar may perform testing many times, statistics are collected on peak-point receiving time of received pulse signals that is obtained from the tests, and then the second probability distribution of the peak-point receiving time is determined based on a statistical result. This may not be limited in this application.

Moreover, in an implementation, as shown in FIG. 6A and FIG. 6B, the determining a third probability distribution based on the P clipping sampling points may include the following steps.

S2033: The laser radar determines the value range of the peak-point signal strength based on signal strength corresponding to the P clipping sampling points.

For example, in FIG. 1(b), it can be learned that the signal strength of the clipping sampling points is generally near the signal strength P due to existence of the clipping phenomenon. In addition, because it can be determined that a minimum value of the peak-point signal strength is greater than the signal strength of the clipping sampling points, the minimum value of the value range of the peak-point signal strength can be determined based on the signal strength corresponding to the P clipping sampling points. For example, maximum signal strength in the signal strength corresponding to the P clipping sampling points may be used as the minimum value of the value range of the peak-point signal strength.

Then, after the minimum value of the value range of the peak-point signal strength is determined, the value range of the peak-point signal strength can be further determined. For example, peak-point signal strength of the laser pulse signal transmitted by the laser radar may be used as a maximum value of the peak-point signal strength. In this way, the value range of the peak-point signal strength can be determined when the maximum value and the minimum value of the peak-point signal strength are known.

S2034: The laser radar determines the third probability distribution based on the value range of the peak-point signal strength.

Similar to S2032, after the value range of the peak-point signal strength is determined, the third probability distribution of the peak-point signal strength within the value range may be determined based on the prior information such as the characteristics of the laser radar.

In a possible design, for ease of calculation, it may be considered that the probability distribution of the peak-point signal strength within the value range is an even distribution. Then, the probability distribution of the peak-point signal strength when the peak-point signal strength satisfies the even distribution within the value range of the peak-point signal strength may be determined, to obtain the third probability distribution.

For example, if the waveform of the received pulse signal satisfies the formula (1), the third probability distribution may be reflected as a probability distribution $p_{(A)}$ of the waveform parameter $A$, and is expressed as follows:

$$p_{(A)} = \begin{cases} \dfrac{1}{A_2 - A_1} & A_1 \leq A \leq A_2 \\ 0 & A < A_1 \text{ or } A > A_2 \end{cases}$$

$A_2$ represents the minimum value of the value range of the peak-point signal strength, and $A_1$ represents the maximum value of the value range of the peak-point signal strength.

In another possible design, there is an association relationship between the signal strength of the received pulse signal and surface reflectivity of the object reflecting the received pulse signal. For example, higher surface reflectivity of the object usually indicates corresponding higher signal strength of the received pulse signal. In addition, because the laser radar detects a variety of objects, the surface reflectivity of the object reflecting the received pulse signal may be considered as an even distribution. Further, the probability distribution of the peak-point signal strength within the value range of the peak-point signal strength when a probability distribution of the surface reflectivity of the object reflecting the received pulse signal is the even distribution may be determined, to obtain the third probability distribution.

The third probability distribution may be alternatively determined in another manner. For example, the laser radar may perform testing many times, statistics are collected on peak-point signal strength of received pulse signals that is obtained from tests, and then the third probability distribution of the peak-point signal strength is determined based on a statistical result. This may not be limited in this application.

S204: The laser radar determines a fourth probability distribution of a pulse width of the received pulse signal.

For example, a value range of the pulse width of the received pulse signal and the fourth probability distribution of the pulse width within the value range may be obtained by testing the laser pulse signal transmitted by the laser radar in different use scenarios.

In a possible design, for ease of calculation, it may be considered that the probability distribution of the pulse width within the value range is an even distribution. Further, the probability distribution of the peak-point signal strength within the value range of the peak-point signal strength when the probability distribution of the surface reflectivity of the object reflecting the received pulse signal is the even distribution may be determined, to obtain the fourth probability distribution.

For example, if the waveform of the received pulse signal satisfies the formula (1), the fourth probability distribution may be reflected as a probability distribution $p_{(\sigma)}$ of the waveform parameter σ, and is expressed as follows:

$$p_{(\sigma)} = \begin{cases} \dfrac{1}{\sigma_2 - \sigma_1} & \sigma_1 \le \sigma \le \sigma_2 \\ 0 & \sigma < \sigma_1 \text{ or } \sigma > \sigma_2 \end{cases}$$

$\sigma_1$ represents a minimum value of the value range of the pulse width, and $\sigma_2$ represents a maximum value of the value range of the pulse width.

S205: The laser radar determines, based on the second probability distribution, the third probability distribution, and the fourth probability distribution, a fifth probability distribution indicating that each waveform in the preset waveform set is the received pulse signal.

For example, a probability that a waveform (for example, the target waveform) in the preset waveform set is the received pulse signal may be a probability that simultaneously satisfies the following three items:

(1) Peak-point receiving time of the target waveform is the peak-point receiving time of the received pulse signal.
(2) Peak-point signal strength of the target waveform is the peak-point signal strength of the received pulse signal.
(3) A pulse width of the target waveform is the pulse width of the received pulse signal.

To be specific, the probability that a waveform in the preset waveform set is the received pulse signal may be expressed as a product of respective probabilities of the foregoing three items, that is, $p_{(\theta)} = p_{(t)}p_{(A)}p_{(\sigma)}$, where $p_{(\theta)}$ represents a probability that a waveform whose waveform parameters A, t, and σ are θ in the preset waveform set is the received pulse signal. In other words, the fifth probability distribution may be expressed as a product of the second probability distribution, the third probability distribution, and the fourth probability distribution.

S206: The laser radar determines, based on the first probability distribution and the fifth probability distribution, a sixth probability distribution indicating that the received pulse signal is each waveform in the preset waveform set. For example, according to a Bayesian formula, the first probability distribution may be considered as the probability distribution $p_{(y|\theta)}$ of the waveform of the received pulse signal when the M rising-edge sampling points (that is, M sampling points distributed on the waveform of the received pulse signal) are given. In other words, the first probability distribution is a likelihood function $L_{(\theta|y)}$ of the waveform of the received pulse signal. In addition, the fifth probability distribution may be considered as a prior distribution of the waveform of the received pulse signal, that is, $p_{(\theta)}$, In this case, when $L_{(\theta|y)}$ and $p_{(\theta)}$ are known, the sixth probability distribution $P_{(\theta|y)}$ indicating that the received pulse signal is each waveform in the preset waveform set, that is, a posterior distribution of the waveform of the received pulse signal, may be calculated by

$$P_{(\theta|y)} = \frac{L_{(\theta|y)}P_{(\theta)}}{P_{(y)}}$$

using the Bayesian formula . $P_{(y)}$ may be set depending on an actual requirement or $P_{(y)}$ may be canceled by using a related algorithm during calculation.

In an implementation, the sixth probability distribution may be determined by using Markov chain Monte Carlo (Markov Chain Monte Carlo, MCMC) algorithms. Specifically, S206 may include:
constructing, based on the first probability distribution and the fifth probability distribution, a Markov chain by using the preset waveform set as state space, to obtain a sample sequence $\{z_1, z_2, \ldots, z_m, z_{m+1}, \ldots, z_{m+n-1}, z_{m+n}\}$ of the Markov chain.

Each sample in the sample sequence of the Markov chain is used to represent one waveform. In addition, it can be learned from the MCMC algorithms that a probability of a sample value in the sample sequence of the Markov chain gradually converges to the sixth probability distribution. Therefore, the last n samples $\{z_{m+1}, \ldots, z_{m+n-1}, z_{m+n}\}$ in the sample sequence $\{z_1, z_2, \ldots, z_m, z_{m+1}, \ldots, z_{m+n-1}, z_{m+n}\}$ are used to represent the sixth probability distribution.

In a possible design, the Markov chain may be constructed by using a Metropolis-Hastings algorithm in the MCMC algorithms. An acceptance distribution $\alpha(z, z')$ in the Metropolis-Hastings algorithm satisfies the following formula (6):

$$\alpha(z, z') = \min\left\{1, \frac{p(y \mid z')p(z')q(z', z)}{p(y \mid z)p(z)q(z, z')}\right\} \qquad \text{formula (6)}$$

z is one sample in the sample sequence of the Markov chain, z' is a sample following z in the sample sequence of the Markov chain, each sample in the sample sequence of the Markov chain is used to represent one waveform, $p(y \mid z')$ is a probability corresponding to the waveform z' in the first probability distribution, $p(y \mid z)$ is a probability corresponding to the waveform z in the first probability distribution, $p(z')$ is a probability corresponding to the waveform $\underline{z'}$ in the fifth probability distribution, $p(z)$ is a probability corresponding to the waveform z in the fifth probability distribution, and $q(z', z)$ and $q(z, z')$ are proposal distributions of the Markov chain.

That the received pulse signal is a Gaussian pulse and current signal strength s of the received pulse signal and current time x satisfy the formula (1), that is,

$$\mathrm{s} = A\exp\left(-\frac{(x-t)^2}{2\sigma^2}\right)$$

, is used as an example for describing a process of constructing the Markov chain by using the Metropolis-Hastings algorithm. The process may include the following step 1 to step 4.

Step 1: Randomly set an initial waveform, namely, the first sample $Z_1$ of the Markov chain.

Specifically, because the received pulse signal satisfies the formula (1), a waveform parameter $\theta$ may be used to represent one waveform. In this case, the initial waveform $Z_1$ may be expressed as $\theta_1 = (A_1, t_1, \sigma_1)$.

Step 2: Set proposal distributions of the Metropolis-Hastings algorithm.

In an actual implementation process, the proposal distributions may be set by referencing related content in the conventional technology. Different proposal distributions have different rates of convergence. Specific proposal distributions to be used may not be limited in this application.

Step 3: Extract $\theta_2 = (A_2, t_2, \sigma_2)$ based on the proposal distributions, and calculate $\alpha(\theta_1, \theta_2)$ based on the acceptance distribution $\alpha(z,z')$.

Step 4: Extract a numeral $u$ randomly from a range (0, 1), and if $u < \alpha(\theta_1, \theta_2)$ holds true, determine that the second sample $Z_2$ of the Markov chain is $\theta_2$; otherwise, repeat step 3 until the second sample $Z_2$ of the Markov chain is determined.

The samples of the Markov chain are sequentially determined by iterating step 3 and step 4, to obtain the sample sequence $\{z_1, z_2, ..., z_m, z_{m+1}, ..., z_{m+n-1}, z_{m+n}\}$ of the Markov chain.

S207: Determine a first preset waveform from the preset waveform set based on the sixth probability distribution, and determine the peak-point receiving time and the peak-point signal strength of the received pulse signal based on the first preset waveform.

After the sixth probability distribution indicating that the received pulse signal is each waveform in the preset waveform set is determined, a waveform (namely, the first preset waveform) that may be the received pulse signal may be determined from the preset waveform set based on the sixth probability distribution. For example, an expectation of the sixth probability distribution may be calculated to obtain the first preset waveform, or a waveform with a maximum probability in the sixth probability distribution may be selected as the first preset waveform. Next, the peak-point receiving time and the peak-point signal strength of the received pulse signal may be determined based on the first preset waveform.

In a possible design, when the sixth probability distribution is determined by using the MCMC algorithms, the determining a first preset waveform from the preset waveform set based on the sixth probability distribution may include: calculating an expectation of the last n samples $\{z_{m+1}, z_{m+n-1}, z_{m+n}\}$ in the sample sequence of the Markov chain to obtain the first preset waveform.

According to the signal processing method provided in this embodiment, in a process of determining the waveform of the received pulse signal, a likelihood function (namely, the first probability distribution) of the waveform of the received pulse signal is first determined based on the rising-edge sampling point obtained through sampling. Then, a prior distribution (namely, the fifth probability distribution) of the waveform of the received pulse signal is determined based on the prior information of the received pulse signal, where the prior information includes probability distributions of various parameters that affect the waveform of the received pulse signal, and specifically includes: the probability distribution of the peak-point receiving time of the received pulse signal (namely, the second probability distribution), the probability distribution of the peak-point signal strength of the received pulse signal (namely, the third probability distribution), and the probability distribution of the pulse width of the received pulse signal (namely, the fourth probability distribution). Further, the posterior distribution (namely, the sixth probability distribution) of the waveform of the received pulse signal may be calculated. Afterwards, the waveform (namely, the first preset waveform) that may be the received pulse signal may be determined from the preset waveform set based on the sixth probability distribution. Next, the peak-point receiving time and the peak-point signal strength of the received pulse signal may be determined based on the first preset waveform. The peak-point signal strength and the peak-point receiving time can be determined more accurately by using the foregoing method.

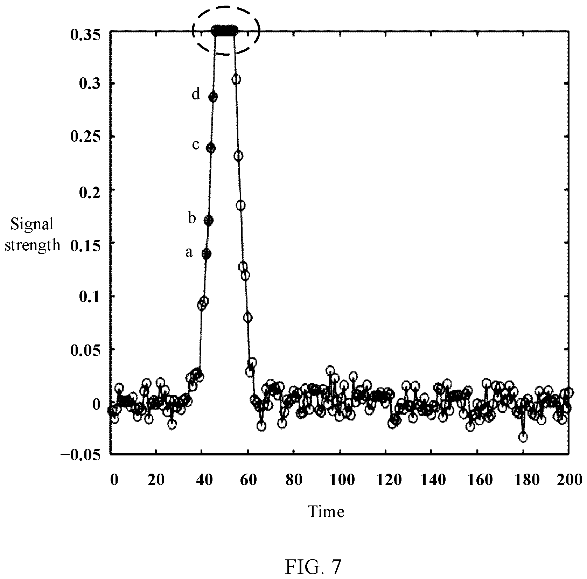

The following describes beneficial effects of the signal processing method provided in this embodiment based on an actual simulation result. FIG. 7 shows sampling points (denoted by circles in the figure) obtained by performing sampling by the laser radar on a received pulse signal and a waveform of the received pulse signal that is obtained through fitting by using the sampling points (a waveform obtained by sequentially connecting the sampling points in the figure). It can be learned that in the figure, a clipping phenomenon exists at a part that is of the fitted received pulse signal and that is circled by a dashed line. Therefore, peak-point signal strength and peak-point receiving time of the received pulse signal cannot be accurately determined based on the fitted received pulse signal in FIG. 7. Then, the waveform of the received pulse signal is obtained through fitting separately by using two methods. In a first method, the waveform of the received pulse signal is obtained through fitting based on a plurality of rising-edge sampling points by using a least square method, and the peak-point receiving time and the peak-point signal strength of the received pulse signal are determined based on the fitted waveform. In a second method, the waveform of the received pulse signal is determined by using the signal processing method provided in this embodiment, and the peak-point receiving time and the peak-point signal strength of the received pulse signal are determined based on the fitted waveform. Sampling points at a rising-edge part of the received pulse signal that are used in one of the two methods are the same as those used in the other method, and are four sampling points a, b, c, and d in FIG. 7.

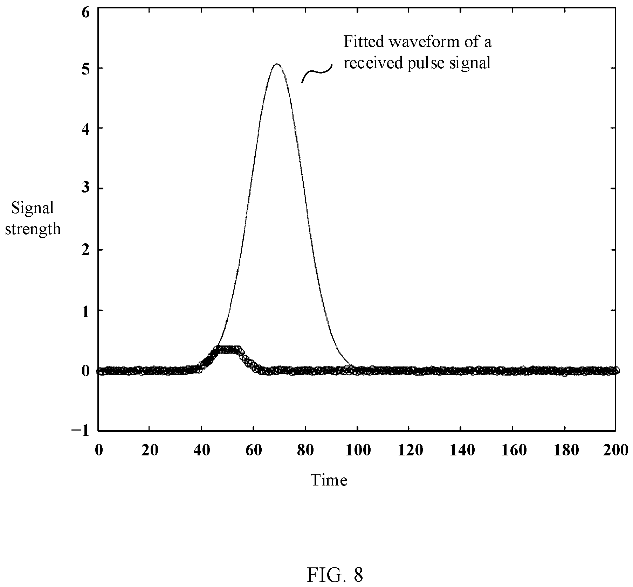

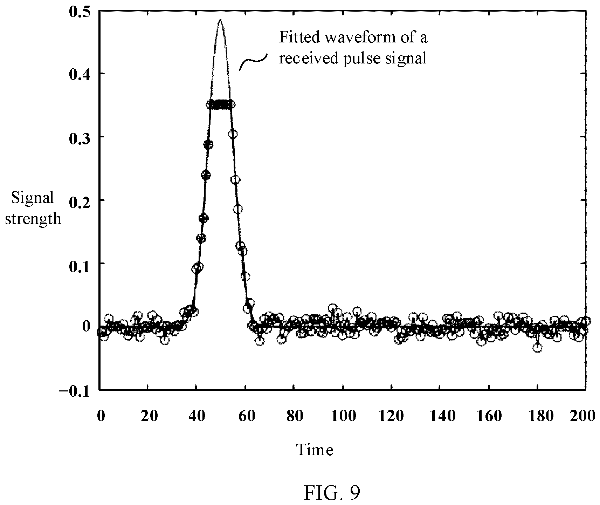

In a process of performing Monte Carlo simulation for 100 times separately by using the two methods, when the waveform of the received pulse signal is obtained through fitting by using the first method, the fitted waveform of the received pulse signal is usually a waveform shown in FIG. 8. It can be learned that there is a large error between the fitted waveform of the received pulse signal and the received pulse signal. FIG. 9 shows a waveform of a received pulse signal obtained through fitting by using the signal processing method (namely, the second method) provided in this embodiment. It can be learned that fitting performance achieved by using the signal processing method provided in this embodiment is desirable.

Further, the following Table 1 lists statistical results of ToFs calculated based on simulation results obtained after Monte Carlo simulation is performed for 100 times separately by using the two methods, and the following Table 2 lists statistical results of amplitudes (namely, the peak-point signal strength) of the received pulse signal calculated based on simulation results obtained after Monte Carlo simulation is performed for 100 times separately by using the two methods.

**Table 1**

|  | Mean deviation of ToFs | Standard deviation of ToFs |
|---|---|---|
| First method | 27.81 | 250.59 |
| Second method | 0.14 | 0.31 |

**Table 2**

|  | Mean deviation of amplitudes | Standard deviation of amplitudes |
|---|---|---|
| First method | 2.9886e+23 | 2.9886e+24 |
| Second method | 0.0046 | 0.0344 |

It can be learned from Table 1 and Table 2 that the laser radar using the method provided in this application (namely, the second method in the tables) can greatly improve accuracy of a detection result.

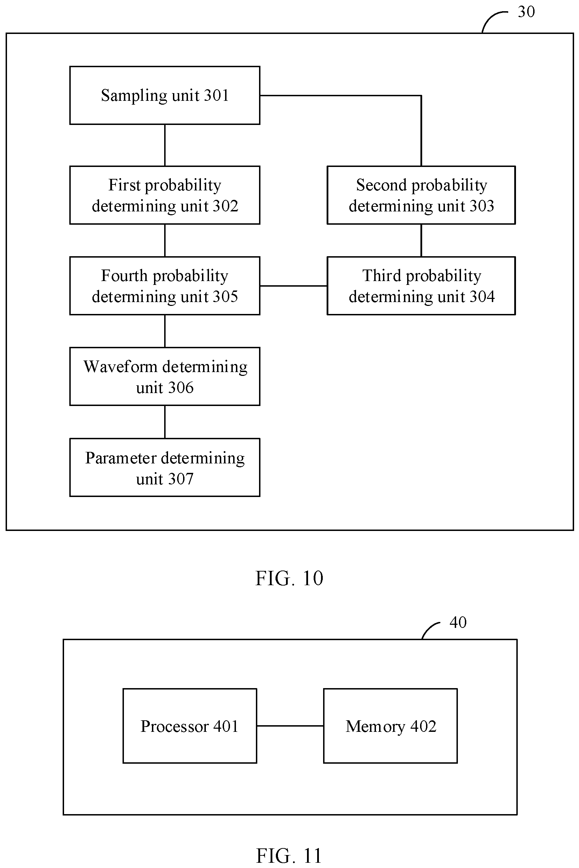

In another embodiment, FIG. 10 is a schematic diagram of composition of a signal processing apparatus according to an embodiment of this application. The signal processing apparatus 30 may be a part of the laser radar in the foregoing method embodiment. When the signal processing apparatus 30 runs, the laser radar is enabled to perform the signal processing method provided in the foregoing embodiment. For example, in specific implementation, the signal processing apparatus 30 may be specifically the signal processing module 108 in the laser radar shown in FIG. 2. The signal processing apparatus 30 may be alternatively a chip or a system-on-a-chip in the laser radar. Certainly, the signal processing apparatus 30 can also be applied to another device in which peak-point receiving time and peak-point signal strength of a received pulse signal need to be determined, so that the device determines the received pulse signal more accurately.

In an implementation, as shown in FIG. 10, the signal processing apparatus 30 may include: a sampling unit 301, configured to perform N times of sampling on a received pulse signal to obtain N sampling points, where sampling parameters of each of the N sampling points include receiving time and signal strength that are corresponding to the sampling point, the N sampling points include M rising-edge sampling points and P clipping sampling points, and N, M, and P are all integers greater than or equal to 1;

a first probability determining unit 302, configured to determine a first probability distribution of the M rising-edge sampling points distributed on each waveform in a preset waveform set, where the preset waveform set includes at least one preset waveform;

a second probability determining unit 303, configured to determine a second probability distribution of peak-point receiving time of the received pulse signal and a third probability distribution of peak-point signal strength of the received pulse signal based on the P clipping sampling points, where

the second probability determining unit 303 is further configured to determine a fourth probability distribution of a pulse width of the received pulse signal;

a third probability determining unit 304, configured to determine, based on the second probability distribution, the third probability distribution, and the fourth probability distribution, a fifth probability distribution indicating that each waveform in the preset waveform set is the received pulse signal;

a fourth probability determining unit 305, configured to determine, based on the first probability distribution and the fifth probability distribution, a sixth probability distribution indicating that the received pulse signal is each waveform in the preset waveform set;

a waveform determining unit 306, configured to determine a first preset waveform from the preset waveform set based on the sixth probability distribution; and

a parameter determining unit 307, configured to determine the peak-point receiving time and the peak-point signal strength of the received pulse signal based on the first preset waveform.

In a possible design, the second probability determining unit 303 is specifically configured to: determine a minimum value of a value range of the peak-point receiving time based on a smallest value of receiving time corresponding to the P clipping sampling points; determine a maximum value of the value range of the peak-point receiving time based on a largest value of the receiving time corresponding to the P clipping sampling points; determine the second probability distribution based on the value range of the peak-point receiving time; determine a minimum value of a value range of the peak-point signal strength based on signal strength corresponding to the P clipping sampling points; and determine the third probability distribution based on the value range of the peak-point signal strength.

In a possible design, the determining the second probability distribution based on the value range of the peak-point receiving time includes: determining a probability distribution of the peak-point receiving time when the peak-point receiving time satisfies an even distribution within the value range of the peak-point receiving time, to obtain the second probability distribution.

In a possible design, the determining the third probability distribution based on the value range of the peak-point signal strength includes: determining a probability distribution of the peak-point signal strength when the peak-point signal strength satisfies an even distribution within the value range of the peak-point signal strength, to obtain the third probability distribution.

In a possible design, the determining the third probability distribution based on the value range of the peak-point signal strength includes: determining a probability distribution of the peak-point signal strength within the value range of the peak-point signal strength when a probability distribution of surface reflectivity of an object reflecting the received pulse signal is an even distribution, to obtain the third probability distribution.

In a possible design, the second probability determining unit 303 is specifically configured to determine a probability distribution of the pulse width when the pulse width satisfies an even distribution within a value range of the pulse width, to obtain the fourth probability distribution.

In a possible design, the first probability determining unit 302 is specifically configured to: determine a probability distribution of each of the M rising-edge sampling points distributed on each waveform in the preset waveform set; and determine the first probability distribution based on the probability distribution of each of the M rising-edge sampling points distributed on each waveform in the preset waveform set.

In a possible design, the determining a probability distribution of each of the M rising-edge sampling points distributed on each waveform in the preset waveform set includes: based on a probability distribution of noise strength during sampling of a target sampling point, determining a probability distribution of the target sampling point distributed on each waveform in the preset waveform set, where the target sampling point includes any one of the M rising-edge sampling points.

In a possible design, the probability distribution of the target sampling point distributed on each waveform in the preset waveform set satisfies the following formula 1:

$$p_k = \left( \frac{1}{\pi N_0} \right)^{\frac{1}{2}} \exp\left( -\frac{(y_k - s_k)^2}{N_0} \right) \qquad \text{formula 1}$$

$p_k$ represents a distribution probability of the target sampling point $k$ on a target waveform in the preset waveform set,

$y_k$ represents signal strength corresponding to the target sampling point $k$, and $s_k$ represents signal strength of the target waveform during collection of the target sampling point $k$.

In a possible design, the fourth probability determining unit 305 is specifically configured to: construct, based on the first probability distribution and the fifth probability distribution, a Markov chain by using the preset waveform set as state space, to obtain a sample sequence $\{z_1,z_2,...,z_m,z_{m+1},...,z_{m+n-1},z_{m+n}\}$ of the Markov chain, where each sample in the sample sequence is used to represent one waveform, and the last n samples $\{z_{m+1},...,z_{m+n-1},z_{m+n}\}$ in the sample sequence $\{z_1,z_2,...,z_m,z_{m+1},...,z_{m+n-1},z_{m+n}\}$ are used to represent the sixth probability distribution. The waveform determining unit 306 is specifically configured to calculate an expectation of the last n samples $\{z_{m+1},...,z_{m+n-1},z_{m+n}\}$ to obtain the first preset waveform.

In a possible design, the constructing, based on the first probability distribution and the fifth probability distribution, a Markov chain by using the preset waveform set as state space includes:
constructing, by using a Metropolis-Hastings algorithm, the Markov chain whose acceptance distribution $\alpha(z,z')$ satisfies the following formula 2:

$$\alpha(z,z') = \min\left\{1, \frac{p(y\mid z')p(z')q(z',z)}{p(y\mid z)p(z)q(z,z')}\right\} \qquad \text{formula 2}$$

z is one sample in the sample sequence of the Markov chain, $z'$ is a sample following z in the sample sequence of the Markov chain, $p(y\mid z')$ is a probability corresponding to $z'$ in the first probability distribution, $p(y\mid z)$ is a probability corresponding to z in the first probability distribution, $p(z')$ is a probability corresponding to $z'$ in the fifth probability distribution, $p(z)$ is a probability corresponding to z in the fifth probability distribution, and $q(z',z)$ and $q(z,z')$ are proposal distributions of the Markov chain.

In another embodiment, FIG. 11 is another schematic diagram of composition of a data transmission apparatus. The data transmission apparatus 40 includes one or more processors 401 and one or more memories 402. The one or more processors 401 are coupled to the one or more memories 402, and the memory 402 is configured to store computer executable instructions. For example, in some embodiments, when the processor 401 executes the instructions stored in the memory 402, the data transmission apparatus 40 is enabled to perform S201 to S207 shown in FIG. 5 and other operations that need to be performed by the laser radar

An embodiment of this application further provides a computer-readable storage medium. The computer-readable storage medium stores instructions. When the instructions are run, the method provided in embodiments of this application is performed.

An embodiment of this application further provides a computer program product including instructions. When the computer program product runs on a computer, the computer is enabled to perform the method provided in embodiments of this application.

In addition, an embodiment of this application further provides a chip. The chip includes a processor. When the processor executes computer program instructions, the chip is enabled to perform the method provided in embodiments of this application. The instructions may come from a memory inside the chip, or may come from a memory outside the chip. Optionally, the chip further includes an input/output circuit used as a communications interface.

All or some of functions, actions, operation, steps, or the like in the foregoing embodiments may be implemented by using software, hardware, firmware, or any combination thereof. When a software program is used to implement the foregoing embodiments, all or some of the foregoing embodiments may be implemented in a form of a computer program product. The computer program product includes one or more computer instructions. When the computer program instructions are loaded and executed on a computer, the procedure or functions according to embodiments of this application are completely or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state disk, SSD)), or the like. Although this application is described with reference to specific features and embodiments thereof, it is clear that various modifications and combinations may be made to them without departing from the spirit and scope of this application. Correspondingly, this specification and the accompanying drawings are merely example descriptions of this application defined by the appended claims, and are considered as covering any or all of modifications, variations, combinations, or equivalents within the scope of this application. It is clearly that a person skilled in the art can make various modifications and variations to this application without departing from the spirit and scope of this application. This application is intended to cover these modifications and variations of this application provided that they fall within the scope of the claims and their equivalent technologies of this application.

**Claims**

1. A signal processing method, comprising:

   performing N times of sampling on a received pulse signal to obtain N sampling points, wherein sampling parameters of each of the N sampling points comprise receiving time and signal strength that are corresponding to the sampling point, the N sampling points comprise M rising-edge sampling points and P clipping sampling points, and N, M, and P are all integers greater than or equal to 1;
   determining a first probability distribution of the M rising-edge sampling points distributed on each waveform in a preset waveform set, wherein the preset waveform set comprises at least one preset waveform;
   determining a second probability distribution of peak-point receiving time of the received pulse signal and a third probability distribution of peak-point signal strength of the received pulse signal based on the P clipping sampling points;
   determining a fourth probability distribution of a pulse width of the received pulse signal;
   determining, based on the second probability distribution, the third probability distribution, and the fourth probability distribution, a fifth probability distribution indicating that each waveform in the preset waveform set is the received pulse signal;
   determining, based on the first probability distribution and the fifth probability distribution, a sixth probability distribution indicating that the received pulse signal is each waveform in the preset waveform set;
   determining a first preset waveform from the preset waveform set based on the sixth probability distribution; and
   determining the peak-point receiving time and the peak-point signal strength of the received pulse signal based on the first preset waveform.

2. The method according to claim 1, wherein the determining a second probability distribution of peak-point receiving time of the received pulse signal and a third probability distribution of peak-point signal strength of the received pulse signal based on the P clipping sampling points comprises:

   determining a minimum value of a value range of the peak-point receiving time based on a smallest value of receiving time corresponding to the P clipping sampling points; and determining a maximum value of the value range of the peak-point receiving time based on a largest value of the receiving time corresponding to the P clipping sampling points;
   determining the second probability distribution based on the value range of the peak-point receiving time;
   determining a minimum value of a value range of the peak-point signal strength based on signal strength corresponding to the P clipping sampling points; and
   determining the third probability distribution based on the value range of the peak-point signal strength.

3. The method according to claim 2, wherein the determining the second probability distribution based on the value range of the peak-point receiving time comprises:
   determining a probability distribution of the peak-point receiving time when the peak-point receiving time satisfies an even distribution within the value range of the peak-point receiving time, to obtain the second probability distribution.

4. The method according to claim 2 or 3, wherein the determining the third probability distribution based on the value range of the peak-point signal strength comprises:
   determining a probability distribution of the peak-point signal strength when the peak-point signal strength satisfies an even distribution within the value range of the peak-point signal strength, to obtain the third probability distribution.

5. The method according to claim 2 or 3, wherein the determining the third probability distribution based on the value range of the peak-point signal strength comprises:
   determining a probability distribution of the peak-point signal strength within the value range of the peak-point signal strength when a probability distribution of surface reflectivity of an object reflecting the received pulse signal is an even distribution, to obtain the third probability distribution.

6. The method according to any one of claims 1 to 5, wherein the determining a fourth probability distribution of a pulse width of the received pulse signal comprises:
determining a probability distribution of the pulse width when the pulse width satisfies an even distribution within a value range of the pulse width, to obtain the fourth probability distribution.

7. The method according to any one of claims 1 to 6, wherein the determining a first probability distribution of the M rising-edge sampling points distributed on each waveform in a preset waveform set comprises:

   determining a probability distribution of each of the M rising-edge sampling points distributed on each waveform in the preset waveform set; and
   determining the first probability distribution based on the probability distribution of each of the M rising-edge sampling points distributed on each waveform in the preset waveform set.

8. The method according to claim 7, wherein the determining a probability distribution of each of the M rising-edge sampling points distributed on each waveform in the preset waveform set comprises:
based on a probability distribution of noise strength during sampling of a target sampling point, determining a probability distribution of the target sampling point distributed on each waveform in the preset waveform set, wherein the target sampling point comprises any one of the M rising-edge sampling points.

9. The method according to claim 8, wherein the probability distribution of the target sampling point distributed on each waveform in the preset waveform set satisfies the following formula 1:

$$p_k = \left(\frac{1}{\pi N_0}\right)^{\frac{1}{2}} \exp\left(-\frac{(y_k - s_k)^2}{N_0}\right) \quad \text{formula 1}$$

wherein $p_k$ represents a distribution probability of the target sampling point $k$ on a target waveform in the preset waveform set, $y_k$ represents signal strength corresponding to the target sampling point $k$, and $s_k$ represents signal strength of the target waveform during collection of the target sampling point $k$.

10. The method according to any one of claims 1 to 9, wherein the determining, based on the first probability distribution and the fifth probability distribution, a sixth probability distribution indicating that the received pulse signal is each waveform in the preset waveform set comprises:

    constructing, based on the first probability distribution and the fifth probability distribution, a Markov chain by using the preset waveform set as state space, to obtain a sample sequence $\{z_1, z_2, ..., z_m, z_{m+1}, ..., z_{m+n-1}, z_{m+n}\}$ of the Markov chain, wherein each sample in the sample sequence is used to represent one waveform, and the last n samples $\{z_{m+1}, ..., z_{m+n-1}, z_{m+n}\}$ in the sample sequence $\{z_1, z_2, ..., z_m, z_{m+1}, ..., z_{m+n-1}, z_{m+n}\}$ are used to represent the sixth probability distribution; and
    the determining a first preset waveform from the preset waveform set based on the sixth probability distribution comprises:
    calculating an expectation of the last n samples $\{z_{m+1}, ..., z_{m+n-1}, z_{m+n}\}$ to obtain the first preset waveform.

11. The method according to claim 10, wherein the constructing, based on the first probability distribution and the fifth probability distribution, a Markov chain by using the preset waveform set as state space comprises:

    constructing, by using a Metropolis-Hastings algorithm, the Markov chain whose acceptance distribution $\alpha(z,z')$ satisfies the following formula 2:

$$\alpha(z, z') = \min\left\{1, \frac{p(y \mid z')p(z')q(z', z)}{p(y \mid z)p(z)q(z, z')}\right\} \quad \text{formula 2}$$

wherein z is one sample in the sample sequence of the Markov chain, $z'$ is a sample following z in the sample sequence of the Markov chain, $p(y \mid z')$ is a probability corresponding to $z'$ in the first probability distribution, $p(y \mid z)$ is a probability corresponding to z in the first probability distribution, $p(z')$ is a probability corresponding to $z'$ in the fifth probability distribution, $p(z)$ is a probability corresponding to z in the fifth probability distribution, and $q(z', z)$ and $q(z, z')$ are proposal distributions of the Markov chain.

12. A signal processing apparatus, comprising:

a sampling unit, configured to perform N times of sampling on a received pulse signal to obtain N sampling points, wherein sampling parameters of each of the N sampling points comprise receiving time and signal strength that are corresponding to the sampling point, the N sampling points comprise M rising-edge sampling points and P clipping sampling points, and N, M, and P are all integers greater than or equal to 1;
a first probability determining unit, configured to determine a first probability distribution of the M rising-edge sampling points distributed on each waveform in a preset waveform set, wherein the preset waveform set comprises at least one preset waveform;
a second probability determining unit, configured to determine a second probability distribution of peak-point receiving time of the received pulse signal and a third probability distribution of peak-point signal strength of the received pulse signal based on the P clipping sampling points, wherein
the second probability determining unit is further configured to determine a fourth probability distribution of a pulse width of the received pulse signal;
a third probability determining unit, configured to determine, based on the second probability distribution, the third probability distribution, and the fourth probability distribution, a fifth probability distribution indicating that each waveform in the preset waveform set is the received pulse signal;
a fourth probability determining unit, configured to determine, based on the first probability distribution and the fifth probability distribution, a sixth probability distribution indicating that the received pulse signal is each waveform in the preset waveform set;
a waveform determining unit, configured to determine a first preset waveform from the preset waveform set based on the sixth probability distribution; and
a parameter determining unit, configured to determine the peak-point receiving time and the peak-point signal strength of the received pulse signal based on the first preset waveform.

13. The apparatus according to claim 12, wherein the second probability determining unit is specifically configured to:

determine a minimum value of a value range of the peak-point receiving time based on a smallest value of receiving time corresponding to the P clipping sampling points; and determine a maximum value of the value range of the peak-point receiving time based on a largest value of the receiving time corresponding to the P clipping sampling points;
determine the second probability distribution based on the value range of the peak-point receiving time;
determine a minimum value of a value range of the peak-point signal strength based on signal strength corresponding to the P clipping sampling points; and
determine the third probability distribution based on the value range of the peak-point signal strength.

14. The apparatus according to claim 13, wherein the determining the second probability distribution based on the value range of the peak-point receiving time comprises: determining a probability distribution of the peak-point receiving time when the peak-point receiving time satisfies an even distribution within the value range of the peak-point receiving time, to obtain the second probability distribution.

15. The apparatus according to claim 13 or 14, wherein the determining the third probability distribution based on the value range of the peak-point signal strength comprises: determining a probability distribution of the peak-point signal strength when the peak-point signal strength satisfies an even distribution within the value range of the peak-point signal strength, to obtain the third probability distribution.

16. The apparatus according to claim 13 or 14, wherein the determining the third probability distribution based on the value range of the peak-point signal strength comprises: determining a probability distribution of the peak-point signal strength within the value range of the peak-point signal strength when a probability distribution of surface reflectivity of an object reflecting the received pulse signal is an even distribution, to obtain the third probability distribution.

17. The apparatus according to any one of claims 12 to 16, wherein the second probability determining unit is specifically configured to determine a probability distribution of the pulse width when the pulse width satisfies an even distribution within a value range of the pulse width, to obtain the fourth probability distribution.

18. The apparatus according to any one of claims 12 to 17, wherein the first probability determining unit is specifically configured to:

   determine a probability distribution of each of the M rising-edge sampling points distributed on each waveform in the preset waveform set; and
   determine the first probability distribution based on the probability distribution of each of the M rising-edge sampling points distributed on each waveform in the preset waveform set.

19. The apparatus according to claim 18, wherein the determining a probability distribution of each of the M rising-edge sampling points distributed on each waveform in the preset waveform set comprises:
   based on a probability distribution of noise strength during sampling of a target sampling point, determining a probability distribution of the target sampling point distributed on each waveform in the preset waveform set, wherein the target sampling point comprises any one of the M rising-edge sampling points.

20. The apparatus according to claim 19, wherein the probability distribution of the target sampling point distributed on each waveform in the preset waveform set satisfies the following formula 1:

$$p_k = \left(\frac{1}{\pi N_0}\right)^{\frac{1}{2}} \exp\left(-\frac{(y_k - s_k)^2}{N_0}\right) \quad \text{formula 1}$$

wherein $p_k$ represents a distribution probability of the target sampling point $k$ on a target waveform in the preset waveform set, $y_k$ represents signal strength corresponding to the target sampling point $k$, and $s_k$ represents signal strength of the target waveform during collection of the target sampling point $k$.

21. The apparatus according to any one of claims 12 to 20, wherein the fourth probability determining unit is specifically configured to construct, based on the first probability distribution and the fifth probability distribution, a Markov chain by using the preset waveform set as state space, to obtain a sample sequence $\{z_1, z_2, ..., z_m, z_{m+1}, ..., z_{m+n-1}, z_{m+n}\}$ of the Markov chain, wherein each sample in the sample sequence is used to represent one waveform, and the last n samples $\{z_{m+1}, ..., z_{m+n-1}, z_{m+n}\}$ in the sample sequence $\{z_1, z_2, ..., z_m, z_{m+1}, ..., z_{m+n-1}, z_{m+n}\}$ are used to represent the sixth probability distribution; and
   the waveform determining unit is specifically configured to calculate an expectation of the last n samples $\{z_{m+1}, ..., z_{m+n-1}, z_{m+n}\}$ to obtain the first preset waveform.

22. The apparatus according to claim 21, wherein the constructing, based on the first probability distribution and the fifth probability distribution, a Markov chain by using the preset waveform set as state space comprises:

   constructing, by using a Metropolis-Hastings algorithm, the Markov chain whose acceptance distribution $\alpha(z, z')$ satisfies the following formula 2:

$$\alpha(z, z') = \min\left\{1, \frac{p(y \mid z')p(z')q(z', z)}{p(y \mid z)p(z)q(z, z')}\right\} \quad \text{formula 2}$$

   wherein z is one sample in the sample sequence of the Markov chain, z' is a sample following z in the sample sequence of the Markov chain, $p(y \mid z')$ is a probability corresponding to z' in the first probability distribution, $p(y \mid z)$ is a probability corresponding to z in the first probability distribution, $p(z')$ is a probability corresponding to z' in the fifth probability distribution, $p(z)$ is a probability corresponding to z in the fifth probability distribution, and $q(z', z)$ and $q(z, z')$ are proposal distributions of the Markov chain.

23. A signal processing apparatus, wherein the signal processing apparatus comprises one or more processors, the one or more processors are coupled to one or more memories, and the one or more memories store computer instructions; and

when the one or more processors execute the computer instructions, the signal processing apparatus is enabled to perform the signal processing method according to any one of claims 1 to 11.

24. A chip, wherein the chip comprises a processing circuit and an interface, and the processing circuit is configured to invoke a computer program from a storage medium and run the computer program stored in the storage medium, to perform the signal processing method according to any one of claims 1 to 11.

25. A laser radar, wherein the laser radar comprises the signal processing apparatus according to any one of claims 12 to 23, or the laser radar comprises the chip according to claim 24.

26. A computer-readable storage medium, wherein the computer-readable storage medium stores instructions, and when the instructions are run, the signal processing method according to any one of claims 1 to 11 is performed.

FIG. 1(a)

FIG. 1(b)

FIG. 1(c)

FIG. 1(d)

Fine steering mirror
103

Transmit-end lens
104

Target
object

Fine steering mirror
106

Receive-end lens
105

Transmitter
102

Detection module
107

Waveform
generator
101

Signal processing
module
108

Output
module
109

10

FIG. 2

FIG. 3

FIG. 4

S201

A laser radar performs N times of sampling on a received pulse signal to obtain N sampling points

S202

The laser radar determines a first probability distribution of M rising-edge sampling points distributed on each waveform in a preset waveform set

S203

The laser radar determines a second probability distribution of peak-point receiving time of the received pulse signal and a third probability distribution of peak-point signal strength of the received pulse signal based on P clipping sampling points

S204

The laser radar determines a fourth probability distribution of a pulse width of the received pulse signal

S205

The laser radar determines, based on the second probability distribution, the third probability distribution, and the fourth probability distribution, a fifth probability distribution indicating that each waveform in the preset waveform set is the received pulse signal

S206

The laser radar determines, based on the first probability distribution and the fifth probability distribution, a sixth probability distribution indicating that the received pulse signal is each waveform in the preset waveform set

S207

Determine a first preset waveform from the preset waveform set based on the sixth probability distribution, and determine the peak-point receiving time and the peak-point signal strength of the received pulse signal based on the first preset waveform

FIG. 5

S201

A laser radar performs N times of
sampling on a received pulse signal to
obtain N sampling points

S2021

The laser radar determines a
probability distribution of each of M
rising-edge sampling points
distributed on each waveform in a
preset waveform set

S2031

Determine a value range of peak-
point receiving time based on a
smallest value and a largest value
of receiving time corresponding to
P clipping sampling points

S2033

The laser radar determines a
value range of peak-point
signal strength based on signal
strength corresponding to the
P clipping sampling points

S204

The laser radar
determines a
fourth
probability
distribution of a
pulse width of
the received
pulse signal

S2022

The laser radar determines a first
probability distribution based on the
probability distribution of each of
the M rising-edge sampling points
distributed on each waveform in the
preset waveform set

S2032

The laser radar determines a
second probability distribution
based on the value range of the
peak-point receiving time

S2034

The laser radar determines a
third probability distribution
based on the value range of
the peak-point signal strength

TO
FIG. 6B

FIG. 6A

S205

The laser radar determines, based on the second probability distribution, the third probability distribution, and the fourth probability distribution, a fifth probability distribution indicating that each waveform in the preset waveform set is the received pulse signal

S206

The laser radar determines, based on the first probability distribution and the fifth probability distribution, a sixth probability distribution indicating that the received pulse signal is each waveform in the preset waveform set

S207

Determine a first preset waveform from the preset waveform set based on the sixth probability distribution, and determine the peak-point receiving time and the peak-point signal strength of the received pulse signal based on the first preset waveform

FIG. 6B

EP 4 184 212 A1

FIG. 7

FIG. 8

FIG. 9

30

```
┌──────────────────────────────────────────────────────────────┐
│                                                              │
│        ┌─────────────────────────┐                           │
│        │   Sampling unit 301     │──────────────┐            │
│        └────────────┬────────────┘              │            │
│                     │                           │            │
│        ┌────────────┴────────────┐    ┌─────────┴──────────┐ │
│        │   First probability     │    │  Second probability│ │
│        │  determining unit 302   │    │ determining unit 303│ │
│        └────────────┬────────────┘    └─────────┬──────────┘ │
│                     │                           │            │
│        ┌────────────┴────────────┐    ┌─────────┴──────────┐ │
│        │   Fourth probability    │    │  Third probability │ │
│        │  determining unit 305   │────│ determining unit 304│ │
│        └────────────┬────────────┘    └────────────────────┘ │
│                     │                                        │
│        ┌────────────┴────────────┐                           │
│        │  Waveform determining   │                           │
│        │        unit 306         │                           │
│        └────────────┬────────────┘                           │
│                     │                                        │
│        ┌────────────┴────────────┐                           │
│        │  Parameter determining  │                           │
│        │        unit 307         │                           │
│        └─────────────────────────┘                           │
│                                                              │
└──────────────────────────────────────────────────────────────┘
```

FIG. 10

40

```
┌──────────────────────────────────────────────────────┐
│                                                      │
│     ┌──────────────────┐       ┌──────────────────┐  │
│     │                  │       │                  │  │
│     │  Processor 401   │───────│   Memory 402     │  │
│     │                  │       │                  │  │
│     └──────────────────┘       └──────────────────┘  │
│                                                      │
└──────────────────────────────────────────────────────┘
```

FIG. 11

## INTERNATIONAL SEARCH REPORT

| | |
|---|---|
| International application No. | |
| | **PCT/CN2020/103124** |

**A.    CLASSIFICATION OF SUBJECT MATTER**

G01S 17/00(2020.01)i;   G01S 7/487(2006.01)i;   G11B 20/22(2006.01)i

According to International Patent Classification (IPC) or to both national classification and IPC

**B.      FIELDS SEARCHED**

Minimum documentation searched (classification system followed by classification symbols)

G01S; G11B

Documentation searched other than minimum documentation to the extent that such documents are included in the fields searched

Electronic data base consulted during the international search (name of data base and, where practicable, search terms used)

EPODOC, WPI, CNPAT, CNKI, IEEE: 激光, 雷达, 探测, 脉冲, 采样, 峰值, 上升沿, 强度, 削顶, 概率分布, 宽度, 失真, laser, radar, LIDAR, LADAR, pulse, sampling, peak, rising, edge, clipping, probability, distribution, width, distortion

**C.      DOCUMENTS CONSIDERED TO BE RELEVANT**

| Category* | Citation of document, with indication, where appropriate, of the relevant passages | Relevant to claim No. |
|---|---|---|
| A | CN 108732553 A (BEIHANG UNIVERSITY) 02 November 2018 (2018-11-02) description, paragraphs 6-60, and figures 1-8 | 1-26 |
| A | CN 1988383 A (ZTE CORPORATION) 27 June 2007 (2007-06-27) entire document | 1-26 |
| A | CN 105044702 A (CHINA INNOVATION INSTRUMENT CO., LTD.) 11 November 2015 (2015-11-11) entire document | 1-26 |
| A | WO 0208780 A2 (UNIVERSITY OF KANSAS CENTER FOR RESEARCH, INC.) 31 January 2002 (2002-01-31) entire document | 1-26 |

☐ Further documents are listed in the continuation of Box C.  ☑ See patent family annex.

| | | |
|---|---|---|
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T"  later document published after the international filing date or priority date and not in conflict with the application but cited to understand the principle or theory underlying the invention

"X"  document of particular relevance; the claimed invention cannot be considered novel or cannot be considered to involve an inventive step when the document is taken alone

"Y"  document of particular relevance; the claimed invention cannot be considered to involve an inventive step when the document is combined with one or more other such documents, such combination being obvious to a person skilled in the art

"&"  document member of the same patent family

| Date of the actual completion of the international search | Date of mailing of the international search report |
|---|---|
| **09 April 2021** | **16 April 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

# EP 4 184 212 A1

| INTERNATIONAL SEARCH REPORT<br>Information on patent family members | | | | International application No.<br>**PCT/CN2020/103124** | | | |
|---|---|---|---|---|---|---|---|

| Patent document<br>cited in search report | | | Publication date<br>(day/month/year) | Patent family member(s) | | | Publication date<br>(day/month/year) |
|---|---|---|---|---|---|---|---|
| CN | 108732553 | A | 02 November 2018 | None | | | |
| CN | 1988383 | A | 27 June 2007 | None | | | |
| CN | 105044702 | A | 11 November 2015 | None | | | |
| WO | 0208780 | A2 | 31 January 2002 | US | 2002071109 | A1 | 13 June 2002 |
| | | | | AU | 8075801 | A | 05 February 2002 |

Form PCT/ISA/210 (patent family annex) (January 2015)